# EUROPEAN PATENT SPECIFICATION

(11) **EP 1 872 002 B1**
(45) Date of publication and mention of the grant of the patent: **07.09.2011**
(21) Application number: 06724425.1
(22) Date of filing: 19.04.2006
(51) Int. Cl.: F02C 1/04, F02C 1/05, F02C 1/06, F02C 6/18, F02C 7/08, F01D 15/02

(54) **ENERGY RECOVERY SYSTEM**
ENERGIERÜCKGEWINNUNGSSYSTEM
SYSTEME DE RECUPERATION D'ENERGIE

(30) Priority: 21.04.2005 SE 0500902
(43) Date of publication of application: 02.01.2008
(73) Proprietor: Compower AB, S-223 70 Lund (SE)
(72) Inventor: MALMRUP, Lars, S-222 40 Lund (SE)
(74) Representative: Karlsson, Leif Gunnar Börje
(86) International application number: PCT/EP2006/003574
(87) International publication number: WO 2006/111362

(56) References cited:
- EP-A- 0 400 701
- US-A- 5 449 568
- US-A- 5 968 680
- US-A1- 2004 088 979
- US-B1- 6 629 413

## Description

### Field of the Invention

The present invention relates to an energy recovery system according to the preamble of claim 1 and to a method according to the preamble of claim 9.

### Background of the Invention

The exhausts from different processes, for example a Diesel engine or a chemical process, often contain heat and/or combustible matter. Different solutions have been proposed in order to recover some of this energy. Steam turbines are often used for this purpose on a larger scale, but these systems are not very practical in smaller sizes. They are too expensive and have rather poor efficiency.

In US 6 629 413, a closed cycle thermodynamic apparatus for powering a combustion machine is disclosed. The apparatus has a compressor for compressing a working medium from a reservoir at temperature T1. The temperature of the working medium increases during compression and reached temperature T2 when leaving the compressor. It is then expanded in an expander for turning the machine. In this manner, mechanical work is extracted from the working medium. The apparatus has a first heat exchanger and a second heat exchanger connected to the compressor and the expander in a closed cycle. It also has a burner and a third heat exchanger. Air, as a heat transfer medium, at ambient temperature T5 is induced into the second exchanger to cool the working medium by receiving heat there from. The temperature of the working medium decreases from T4 to T1 before entering the compressor for repeating the cycle. The air, which is now at a higher temperature T6, is conveyed to the burner where it is mixed with fuel to form a combusting gas reaching an even higher temperature at T7 and passed into the first heat exchanger for heating the working medium at constant pressure. In this manner the temperature of working medium increases to T3, when entering the expander and following expansion for conversion to mechanical power its temperature reduces to T4. The apparatus thereby recovers heat at all the heat exchangers. This reduces the amount of fuel required to heat the air for combustion.

EP 0 400 701 discloses a method and an installation for generating electrical energy. This document differs from the previously known technique in that

The compressor turbine is not fed by exhaust gases of the gas turbine but mainly by the compressed air itself, which is used for that purpose after undergoing an additional temperature increase in the flue gas heat exchanger.

### Summary of the Invention

According to the invention, these and other problems are solved by a system comprising the features of claim 1, and a method comprising the steps of claim 9.

### Brief Description of the Drawings

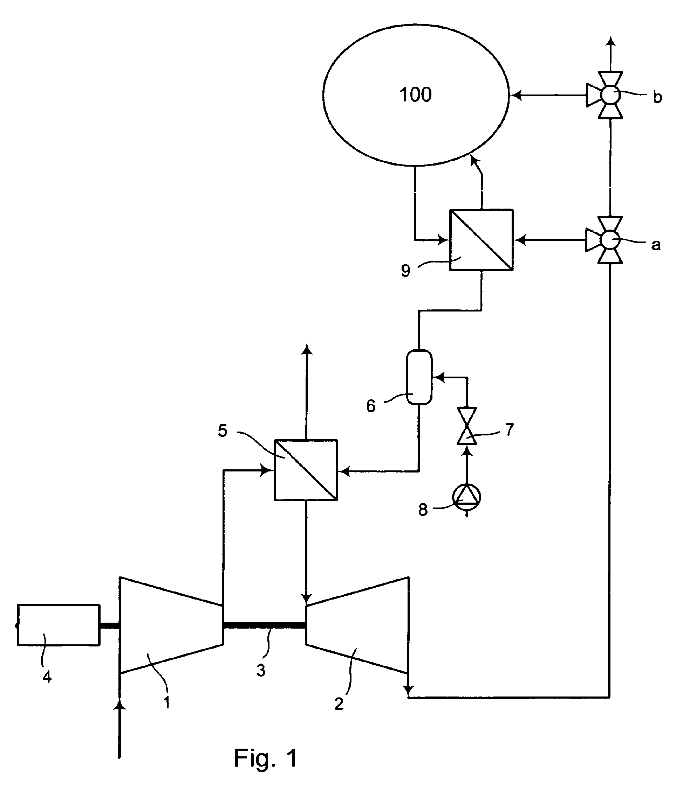

The energy recovery system of the present invention will be more readily understood by looking at the appended drawings, where
Figs. 1-4 are schematical views of different embodiments of said energy recovery system.

### Detailed Description of Preferred Embodiments

The energy recovery system for a process means **100** of the present invention is based on a Brayton cycle and it comprises a compressor **1** and a turbine **2,** see Figs. 1-4, which are interconnected by a main shaft **3.** A generator **4,** e.g. a permanent magnet generator, is also mounted on the main shaft **3.** The subsystem comprising the compressor **1,** turbine **2,** main shaft **3** and generator **4** is called a turbogenerator. The system further comprises a high temperature heat exchanger **5,** which on one side is connected to the flow that goes through the compressor **1** and the turbine **2.** On the other side, the heat exchanger **5** is connected to a flow that comes from a process means **100** from which energy will be recovered, such as a Diesel engine or a chemical process plant.

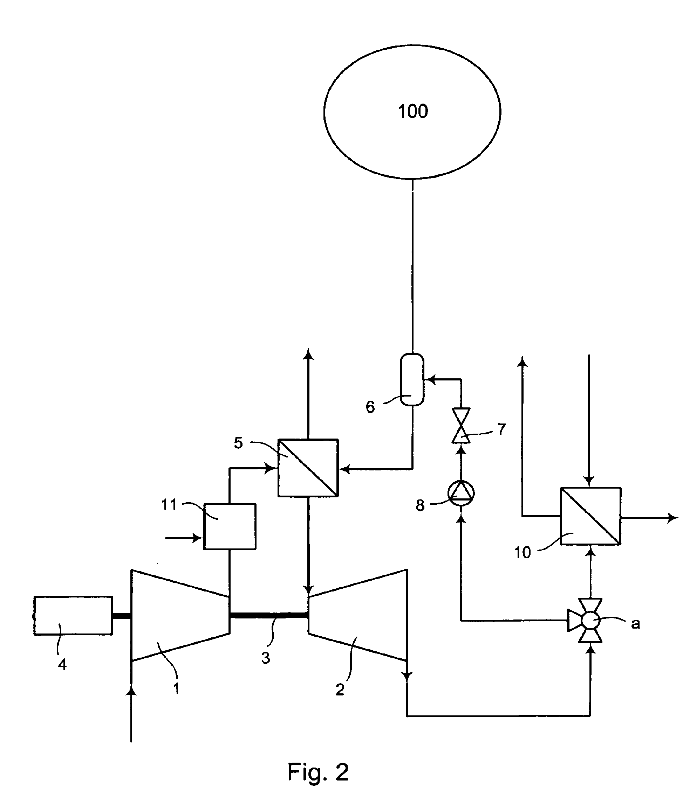

Before the flow reaches the high temperature heat exchanger **5,** it passes a burner **6,** where the flow can be heated to a given temperature level. The burner **6** may be provided with a valve **7** and a fan **8** for supplying external air and/or fuel, in the event that the process is supplying insufficient amounts of exhausts for operating the turbogenerator. A heat exchanger **9** can be provided, which on one side is connected to the turbine **2** outlet and on another side is connected to the outlet of the process means **100.** An additional heat exchanger **10** (Fig. 2) can be provided to transfer energy from the working flow after the turbine **2** to an auxiliary system, such as an external heating system. A fuel cell **11** (Fig. 2) may be fluidly arranged after the compressor **1** and before the turbine **2.**

The high frequency electricity created in the generator **4** is converted to a suitable type of electricity, either DC or AC, by means of power electronics (not shown). The generator **4** can also be operated as a motor during starting of the system. The function of the system is described below, and is illustrated by way of different examples.

The first example of a process means **100** is a Diesel engine where the process flow is exhaust gases that are fed into the burner **6.** The temperature of these exhaust gases are typically 500 °C. This temperature is increased to more than 800 °C in the burner **6** by supplying additional fuel. This heat is transferred in the high temperature heat exchanger **5** to the working flow, which then drives the rotating main shaft **3** and the generator **4** for generation of electricity. If the Diesel engine **100** is used for propulsion of a truck or a boat, the electricity is preferably used to power some of the auxiliary systems of said truck or boat. The burner **6** uses the excess air in the process flow and fuel that is injected into the process flow. This fuel can be any liquid or gaseous fuel.

The working flow leaving the turbine **2** still contains much heat, and this can be recycled in the heat exchanger(s) **9, 10,** for supplying heat to a process **100** or for an external heating system of a boat or truck. The working flow can also be directed to the burner **6** directly or via the valve **7** and/or the fan **8,** see Fig. 2, or be supplied to auxiliary systems of the process **100.**

In a second example, a chemical process is running in the process means **100,** which process has many chemical substances in the exhaust gases, but where the gases not necessarily contain much heat. The exhausts enter the burner **6** where fuel is added and the temperature is increased to at least 800 °C. In this combustion, both the added fuel and the chemical substances of the process flow are burned. This means that the total energy content of the substances has been utilised and that the flow coming out of the process is much cleaner, since the chemical substances have been combusted. The heat from the combustion is again transferred to the working flow of a turbogenerator system **1, 2, 3** and **4,** where electricity is generated. Surplus electric energy or heat can be supplied to the process **100,** according to above, in order to increase the overall efficiency.

Another example of a suitable process **100** is a fuel cell, e.g. a solide oxide or a molten carbonate fuel cell, which is supplied with pressurized air/oxidizer and fuel. The fuel cell generates heat, which together with remaining oxidizer and possibly combustibles may be used to heat the airflow of a turbogenerator according to above. At least a part of the pressurized air/oxidizer for the fuel cell can be taken from the working flow leaving the turbine **2.**

The process means **100** may also be an absorption chiller, which is heated by a fuel burner, a gas heater or similar. The air leaving the turbine **2** may also be directed to a burner of this system.

A fuel cell **11** may also be arranged between the compressor **1** and the turbine **2,** see Fig. 2. Pressurized air is supplied by the compressor 1 to the fuel cell to react with a suitable fuel, e.g. hydrogen, and the hot exhausts, mainly water vapour, nitrogen and remaining oxygen, are directed towards the turbine **2.**

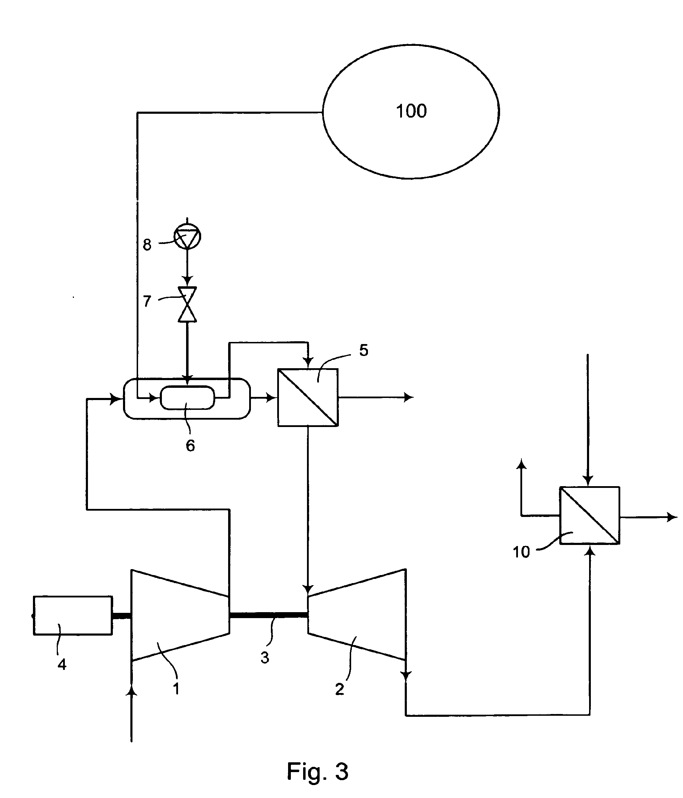

In order to increase the heat transfer to the working flow, the burner **6** can be arranged in close proximity to a pipe of the working flow and even be surrounded by said pipe, see Fig. 3. In this way, more heat can be transferred to the working flow through radiation.

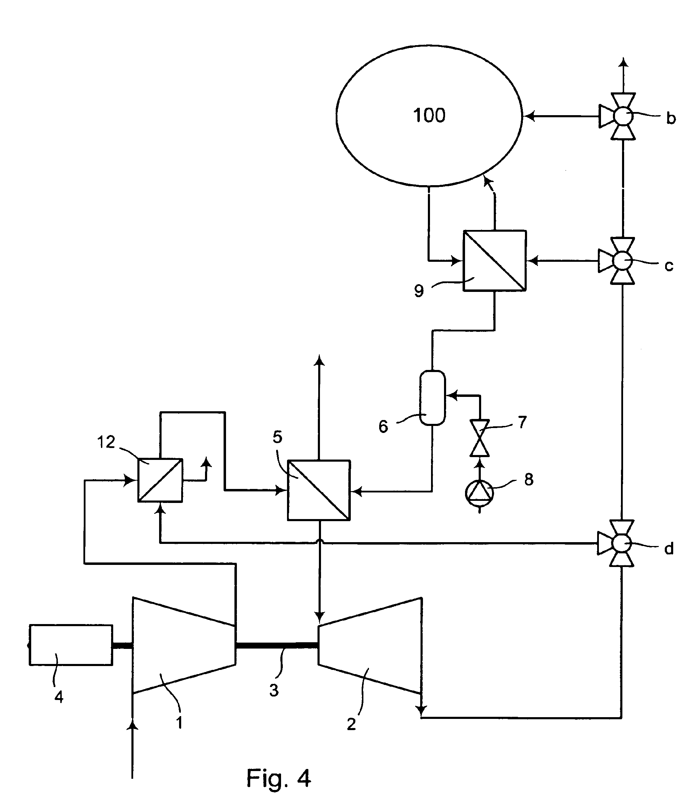

The airflow leaving the turbine **2** can also be directed through a heat exchanger **12,** which is positioned downstream of the compressor **1** but upstream of the heat exchanger **5,** see Fig. 4.

The energy recovery system for a process means **100** can also provide electric energy for its own auxiliary systems, such as the valve **7** and the fan **8,** in order to be self-supporting.

Though specific embodiments are shown in the Figures, it will be apparent to a person skilled in the art to combine features from different figures or to therein incorporate features of the specification without departing from the scope of the invention. Three-way valves **a, b, c** and **d** are used to illustrate possible variations of different embodiments, but are not essential for the operation of a system according to the invention.

The term turbogenerator is everywhere intended to refer to an assembly comprising a compressor, a turbine and a high-speed generator being driven by on a main shaft. The heat exchangers are only depicted generally and can have any flow arrangement, e.g. parallel flow, counter flow or cross flow, regardless of the schematical representations in the appended figures.

## Claims

1. An energy recovery system for a process means (100) comprising
a compressor (1), a turbine (2) and a generator (4) arranged to be driven by a main shaft (3),
a heat exchanger (5) on a first side being fluidly arranged between the compressor (1) and the turbine (2) and on a second side capable of being fluidly arranged downstream of a process means (100), a first inlet for introduction of exhausts from a process means (100), where heat emanating directly or indirectly from the exhausts of said process means (100) can be transferred to an airflow between the compressor (1) and the turbine (2), which airflow is expanded in the turbine (2) which then powers the compressor (1) and the generator (4), for recovering energy from the process, which energy is transformed into electricity so that the overall efficiency of the process is increased, **characterized by** a burner (6) located upstream of the heat exchanger (5), said burner being connectable to the process exhaust system such that said burner (6) is locatable between the process exhaust system and the heat exchanger (5), wherein at least a part of the air leaving the turbine (2) is supplied directly to the burner (6) through a second inlet for introduction of external fuel and air to the burner (6).

2. A system according to claim 1, wherein the electricity generated by the generator (4) is used to power auxiliary systems of the process (100) and/or the energy recovery system.

3. A system according to claim 1, wherein at least a part of the airflow leaving the turbine (2) is used in the process (100).

4. A system according to claim 1, wherein the inlet to the burner comprises a valve (7) and/or a fan (8).

5. A system according to claim 1, wherein the process exhausts emanate from combustion of wood, oat or similar biomass.

6. A system according to claim 1, wherein at least a part of the air leaving the turbine (2) is passed through a heat exchanger (10) that is arranged for heating a boat or truck where the process (100) is taking place.

7. A system according to claim 1, wherein the process (100) is an absorption chiller and the process gas is taken from after a fuel burner in said chiller and at least a part of the airflow leaving the turbine (2) is directed to an inlet of said fuel burner.

8. A system according to claim 1, wherein the process (100) is an engine in a truck or a boat, such as a Diesel engine.

9. A method of recovering energy from an associated process means (100), **characterised by** the steps of:
directing exhausts of said process means (100) through a burner (6),
supplying the burner (6) with external fuel and air,
combusting the external fuel and air together with the exhausts of the process means (100),
directing the combustion gases from the burner (6) through one side of a heat exchanger (5),
directing air from a compressor (1) through another side of the heat exchanger (5), such that heat is transferred between the combustion gases and the air,
directing the air from the heat exchanger (5) to a turbine (2),
expanding said air in the turbine (2), thus extracting energy from the air,
transferring said energy to the compressor (1) and to a generator (4) that is connected to the turbine (2), and
directing at least a part of the air leaving the turbine (2) directly to the burner (6).

## Patentansprüche

1. Energierückgewinnungssystem für ein Prozessmittel (100), das umfasst:
einen Kompressor (1), eine Turbine (2) und einen Generator (4), die dazu ausgelegt sind, durch eine Hauptwelle (3) angetrieben zu werden,
einen Wärmetauscher (5), der auf einer ersten Seite zwischen dem Kompressor (1) und der Turbine (2) fluidtechnisch angeordnet ist und auf einer zweiten Seite stromabseitig eines Prozessmittels (100) fluidtechnisch angeordnet werden kann, wobei ein erster Einlass für die Einleitung von Ausgabesubstanzen von einem Prozessmittel (100) vorgesehen ist, wobei Wärme, die von den Ausgabesubstanzen des Prozessmittels (100) direkt oder indirekt ausgeht, an eine Luftströmung zwischen dem Prozessor (1) und der Turbine (2) übertragen werden kann, wobei die Luftströmung in der Turbine (2) expandiert wird, die dann den Kompressor (1) und den Generator (4) mit Leistung versorgt, um Energie aus dem Prozess zurückzugewinnen, wobei die Energie in Elektrizität umgeformt wird, so dass der Gesamtwirkungsgrad des Prozesses erhöht wird, **gekennzeichnet durch** einen Brenner (6), der sich stromaufseitig des Wärmetauschers (5) befindet, wobei der Brenner mit dem Prozessausgabesystem in der Weise verbunden werden kann, dass der Brenner (6) zwischen dem Prozessausgabesystem und dem Wärmetauscher (5) angeordnet werden kann, wobei wenigstens ein Teil der Luft, die die Turbine (2) verlässt, **durch** einen zweiten Einlass für die Einleitung externen Brennstoffs und externer Luft in den Brenner (6) direkt dem Brenner (6) zugeführt werden kann.

2. System nach Anspruch 1, wobei die durch den Generator (4) erzeugte Elektrizität verwendet wird, um Hilfssysteme des Prozesses (1) und/oder das Energiewiedergewinnungssystem mit Leistung zu versorgen.

3. System nach Anspruch 1, wobei wenigstens ein Teil der Luftströmung, die die Turbine (2) verlässt, in dem Prozess (100) verwendet wird.

4. System nach Anspruch 1, wobei der Einlass in den Brenner ein Ventil (7) und/oder ein Gebläse (8) enthält.

5. System nach Anspruch 1, wobei sich die Prozessausgaben aus der Verbrennung von Holz, Hafer oder ähnlicher Biomasse ergeben.

6. System nach Anspruch 1, wobei wenigstens ein Teil der die Turbine (2) verlassenden Luft durch einen Wärmetauscher (10) geschickt wird, der dazu ausgelegt ist, ein Boot oder einen Lastkraftwagen, wo der Prozess (100) stattfindet, zu erwärmen.

7. System nach Anspruch 1, wobei der Prozess (100) ein Absorptionskühler ist und das Prozessgas von der Auslassseite eines Brennstoffbrenners in dem Kühler entnommen wird und wenigstens ein Teil der die Turbine (2) verlassenden Luftströmung zu einem Einlass des Brennstoffbrenners gelenkt wird.

8. System nach Anspruch 1, wobei der Prozess (100) ein Motor, etwa ein Dieselmotor, in einem Lastkraftwagen oder in einem Boot ist.

9. Verfahren zum Wiedergewinnen von Energie von einem zugeordneten Prozessmittel (100), **gekennzeichnet durch** die folgenden Schritte:
Lenken von Ausgaben des Prozessmittels (100) **durch** einen Brenner (6),
Versorgen des Brenners (6) mit externem Brennstoff und externer Luft,
Verbrennen des externen Brennstoffs und der externen Luft zusammen mit den Ausgaben des Prozessmittels (100),
Lenken der Verbrennungsgase von dem Brenner (6) **durch** eine Seite eines Wärmetauschers (5),
Lenken von Luft von einem Kompressor (1) **durch** eine weitere Seite des Wärmetauschers (5), so dass Wärme zwischen den Verbrennungsgasen und der Luft übertragen wird,
Lenken der Luft von dem Wärmetauscher (5) zu einer Turbine (2),
Expandieren der Luft in der Turbine (2), um so Energie aus der Luft zu extrahieren,
Übertragen der Energie an den Kompressor (1) und an einen Generator (4), der mit der Turbine (2) verbunden ist, und
Lenken wenigstens eines Teils der die Turbine (2) verlassenden Luft direkt zu dem Brenner (6).

## Revendications

1. Système de récupération d'énergie pour des moyens de traitement (100) comprenant :
un compresseur (1), une turbine (2) et un générateur (4) agencés pour être entraînés par un arbre principal (3),
un échangeur de chaleur (5) sur un premier côté qui est agencé de manière fluide entre le compresseur (1) et la turbine (2) et sur un deuxième côté pouvant être agencé de manière fluide en aval des moyens de traitement (100), une première entrée pour l'introduction des gaz d'échappement provenant des moyens de traitement (100), où la chaleur émanant directement ou indirectement des gaz d'échappement desdits moyens de traitement (100) peut être transférée dans un écoulement d'air entre le compresseur (1) et la turbine (2), lequel écoulement d'air qui est expansé dans la turbine (2) alimente ensuite le compresseur (1) et le générateur (4), pour récupérer l'énergie du traitement, laquelle énergie est transformée en électricité de sorte que l'efficacité globale du traitement est accrue, **caractérisé par** un brûleur (6) situé en amont de l'échangeur de chaleur (5), ledit brûleur pouvant être raccordé à un système d'échappement de traitement de sorte que ledit brûleur (6) peut être positionné entre le système d'échappement de traitement et l'échangeur de chaleur (5), dans lequel au moins une partie de l'air sortant de la turbine (2) est amenée directement au brûleur (6) par une deuxième entrée pour l'introduction du combustible externe et de l'air dans le brûleur (6).

2. Système selon la revendication 1, dans lequel l'électricité générée par le générateur (4) est utilisée pour alimenter des systèmes auxiliaires du traitement (100) et/ou le système de récupération d'énergie.

3. Système selon la revendication 1, dans lequel au moins une partie de l'écoulement d'air sortant de la turbine (2) est utilisée dans le traitement (100).

4. Système selon la revendication 1, dans lequel l'entrée dans le brûleur comprend une vanne (7) et/ou un ventilateur (8).

5. Système selon la revendication 1, dans lequel les gaz d'échappement de traitement émanent de la combustion du bois, de l'avoine ou d'une biomasse similaire.

6. Système selon la revendication 1, dans lequel au moins une partie de l'air sortant de la turbine (2) passe par un échangeur de chaleur (10) qui est agencé pour chauffer un bateau ou un camion à l'endroit où le traitement (100) a lieu.

7. Système selon la revendication 1, dans lequel le traitement (100) est un refroidisseur d'absorption et le gaz de traitement est prélevé après un brûleur de combustible dans ledit refroidisseur et au moins une partie de l'écoulement d'air sortant de la turbine (2) est dirigée vers une entrée dudit brûleur de combustible.

8. Système selon la revendication 1, dans lequel le traitement (100) est un moteur dans un camion ou un bateau, tel qu'un moteur diesel.

9. Procédé pour récupérer de l'énergie provenant de moyens de traitement associés (100), **caractérisé par** les étapes consistant à :
diriger les gaz d'échappement desdits moyens de traitement (100) dans un brûleur (6),
alimenter un brûleur (6) en combustible externe et en air,
faire brûler le combustible externe et l'air conjointement avec les gaz d'échappement des moyens de traitement (100),
diriger les gaz de combustion provenant du brûleur (6) par un côté d'un échangeur de chaleur (5),
diriger l'air provenant d'un compresseur (1) par un autre côté de l'échangeur de chaleur (5), de sorte que la chaleur est transférée entre les gaz de combustion et l'air,
diriger l'air de l'échangeur de chaleur (5) jusqu'à une turbine (2),
expanser ledit air dans la turbine (2), extrayant ainsi l'énergie de l'air,
transférer ladite énergie au compresseur (1) et à un générateur (4) qui est raccordé à la turbine (2), et
diriger au moins une partie de l'air sortant de la turbine (2) directement vers le brûleur (6).
